# EUROPEAN PATENT SPECIFICATION

(11) **EP 1 968 849 B1**
(45) Date of publication and mention of the grant of the patent: **10.02.2010**
(21) Application number: 06820557.4
(22) Date of filing: 15.12.2006
(51) Int. Cl.: B63B 21/16, F16J 13/06

(54) **MARINE LINE HAULING DEVICE ASSEMBLY**
SCHIFFSLEINENEINHOLVORRICHTUNGSANORDNUNG
ENSEMBLE DISPOSITIF DE TRANSPORT DE LIGNE MARINE

(30) Priority: 23.12.2005 GB 0526427
(43) Date of publication of application: 17.09.2008
(73) Proprietor: LEWMAR LIMITED, Havant, Hampshire PO9 1JJ (GB)
(72) Inventor: SAM, Robert, Bordon Hampshire GU35 0HW (GB)
(74) Representative: Naylor, Matthew John
(86) International application number: PCT/GB2006/004730
(87) International publication number: WO 2007/071950

(56) References cited:
- EP-B1- 0 112 413
- WO-A-01/35712
- WO-A-2004/067370
- FR-A1- 2 337 291
- FR-A1- 2 865 011
- US-A- 2 982 437
- US-A- 5 800 680

## Description

### BACKGROUND TO THE INVENTION

### Field of the invention

The present invention is concerned with an assembly for hauling a line in a marine environment. Particularly, but not exclusively, the invention is concerned with windlasses, winches and the like for sailing yachts and pleasure craft, including such windlasses and winches that are powered via a motor.

In the context of the present invention, the term "line" is intended to encompass chain, rope and/or cable or other such flexible elongate members capable of taking up tension.

### Related art

It is known to fix a device such as a windlass to the deck of a yacht such as closest prior art document WO 2004/067370, the windlass being adapted to haul and lower anchor line (e.g. chain or rope) for the yacht. Such windlasses can be powered by hand but many users prefer motorised windlasses, e.g. using electric or hydraulic motors. Especially when using electric motors, it is often necessary to use reduction gearing, held in a gearbox, in order to provide the windlass with low geared power. If a motor is used to drive the windlass, it is of course necessary to fix the windlass with respect to the motor casing or gearbox in order to resist the torque transmitted to the windlass by the driveshaft. In the present context, the motor casing and gearbox will together be referred to as the drive casing.

In order to avoid cluttering the deck of the yacht more than necessary, and to some extent to protect the motor, it is preferred to locate the motor for the windlass, and the gearbox, under the deck of the yacht. The driveshaft for the windlass then extends through a hole in the deck from the gearbox into the windlass.

Previously, the windlass has been provided with an attachment flange and the drive casing has.been provided with a corresponding attachment flange, each flange having bolt holes extending through so that bolts may connect the flanges together, to be tightened using nuts. After attachment, the drive shaft extends axially within the flanges from the drive casing to the windlass.

### SUMMARY OF THE INVENTION

The present inventor has realised that the above arrangement has serious disadvantages. In particular, the installation of the drive casing is difficult, since it is necessary to present the drive casing flange to the windlass flange, hold the two in place so that the bolt holes line up, insert the bolts and then thread the corresponding nuts along the bolts to attach the flanges to each other. Furthermore, it is often necessary to carry out this operation in a cramped space underneath the deck. However, it is seen as desirable that the drive casing and windlass are firmly fixed with respect to each other, since the driveshaft often transmits high torques and so this must be resisted by the attachment of the drive casing to the windlass.

Accordingly, in a general aspect, the present invention as defined by independent claims 1, 13, 14 and 15, provides attachment via a flange clamp, the flange clamp circumferentially embracing and attaching first and second attachment flanges and pressing said flanges towards each other via circumferential constriction of or tension in said flange clamp.

In a first preferred aspect, the present invention provides a method of assembling a drive casing and a marine line hauling device, the drive casing being provided with a first attachment flange, the hauling device being provided with a second attachment flange, the method including bringing said first attachment flange and said second attachment flange together and attaching them using a flange clamp circumferentially embracing said flanges, wherein said clamp has an inwardly-facing surface for bearing against said first and second flanges, in which method circumferential constriction of the clamp presses the first and second flanges towards each other.

In a second preferred aspect, the present invention provides a marine line hauling assembly comprising a line hauling device and a drive casing, the drive casing having a first attachment flange and the line hauling device having a second attachment flange, said first and second flanges being attached to each other by a flange clamp circumferentially embracing said flanges and said first and second flanges being pressed together by an inwardly-facing surface of said flange clamp due to circumferential tension in said flange clamp.

In a third preferred aspect, the present invention provides a drive casing kit for a marine line hauling assembly comprising a drive casing and a flange clamp, the drive casing having a first attachment flange for attachment to a second attachment flange of a line hauling device using the flange clamp, the flange clamp having an inwardly-facing surface for bearing against surfaces of the first and second attachment flanges, the flange clamp being suitable for circumferentially embracing said flanges and pressing said flanges together due to circumferential tension in said flange clamp.

In a fourth preferred aspect, the present invention provides a marine craft such as a sailboat or a motorboat having a marine line hauling assembly according to the second aspect.

Preferred and/or optional features of the invention are set out below, and in the specific description of preferred embodiments of the invention. It is to be understood that these are applicable either singly or in any combination with any of the aspects of the invention, unless the context demands otherwise.

Preferably, the drive casing includes a gearbox. The gearbox typically contains reduction gearing for gearing down from an electric motor to a drive shaft. The first attachment flange may be formed in a single piece with a top cap of the drive casing or gearbox.

Preferably, the line hauling device is one of a windlass and a winch.

The first attachment flange and the second attachment flange may be shaped so as to be attachable to each other only in a discrete number of relative positions. For example, the first attachment flange and second attachment flange may attach to each other via an arrangement of pins and recesses, to resist relative rotation of the drive shaft housing and line hauling device in operation. There may be, for example, two, three, four or more pins extending from the first flange, cooperating with the same number of recesses in the second flange, or vice versa. However, there may be more recesses than pins, thereby allowing the first flange to be located relative to the second flange in more than two alternate positions. For example, if the first flange has two pins regularly spaced and the second flange has eight corresponding recesses regularly spaced, then there are eight different location positions for the first flange relative to the second flange. This can be advantageous where the drive casing needs to be located in a particular orientation, e.g. to optimise space saving or to assist in installation.

The axis along which the driveshaft lies can be considered the principal axis of the attachment flanges. Preferably, the first attachment flange has a face for abutment with a corresponding face of the second attachment flange, said face being perpendicular to the principal axis. The face preferably includes a peripheral flat portion and a stepped inner portion, the stepped inner portion also being flat but axially offset from the peripheral flat portion. Preferably, the corresponding face of the second attachment flange also has a stepped inner portion for mating engagement with the stepped inner portion of the first attachment flange. In this way, the two flanges can be more easily located with respect to each other, since the stepped inner portions click into place to indicate axial alignment of the flanges.

Preferably, each flange has a tapered cross-sectional profile, being thinner at the periphery of the flange than at an inner part of the flange. As will be set out in more detail below, this assists with the clamping together of the flanges.

The second flange may be provided integrally with the casing of the line hauling device or may be provided in an adapter portion, the adapter portion having at one end said second attachment flange and at the other end an attachment arrangement for attachment to the casing of the line hauling device.

Preferably, the flange clamp may be attached with respect to either the first or second flange before the step of bringing the first and second flanges together. Typically, the line hauling device is fixed first to the deck of the craft. Therefore, typically, the flange clamp is fixed with respect to the first flange, this being provided extending from the drive casing.

It is preferred that the attachment of the flange clamp with respect to the first flange is achieved so that the flange clamp can be positioned so that it does not interfere with the operation of bringing the first and second flanges together. Thus, preferably, the flange clamp is not attached directly to the first flange at this stage of the operation. Instead, preferably it is attached to a substrate that itself is attached or attachable to the flange. For example, the substrate may form part of a top plate for the drive casing.

The flange clamp may attach to the substrate via a pivot attachment. In this way, it can be pivoted into a position so that it will not interfere with the operation of bringing the first and second flanges together. After the first and second flanges have been brought together, the flange clamp may then be pivoted so as to circumferentially embrace the flanges and clamp them together.

Preferably, the flange clamp is detachable from the substrate. Preferably, the detachment of the flange clamp is achieved by movement of the flange clamp in a direction perpendicular to (or, alternatively, at least not parallel with) the principal axis of the flange. For example, such detachment may be achieved by rotation of the flange clamp about the flange. This may be desirable if the flange clamp could be more easily tightened if located at a different rotational angular position with respect to the flanges.

Preferably, the pivot attachment of the flange clamp to the substrate is achieved via a pivot pin. The pivot pin may extend from the substrate into a corresponding pivot recess in the flange clamp. However, preferably the pivot pin extends from the flange clamp into a corresponding pivot recess in the substrate. The pivot pin may have an enlarged head portion. This may fit into a corresponding enlarged portion of the recess, covered via an overhang. Location of the enlarged head portion into the enlarged portion of the recess therefore may only be possible along a defined path, said defined path not being parallel with the principal axis of the flange but preferably being perpendicular to said axis.

Preferably, the recess for the pivot pin is provided in the substrate at an upstanding portion of the substrate, so that when the flange clamp is attached to the substrate, the inwardly-facing surface of the flange clamp is level with the first flange. In this way, the flange clamp can be rotated into position more easily for clamping the flanges.

Preferably, apart from at the upstanding portion of the substrate, there is a gap between the flange clamp and the substrate. Preferably, this gap extends for at least two thirds of a turn, or three quarters of a turn, or four fifths of a turn, or five sixths of a turn, or more, around the substrate. This provides room for an installer's fingers to locate the flange clamp as required around the flanges.

Some of these features of the flange clamp are considered to be new per se and thus are set out in an independent aspect of the invention below. Also set out below are further preferred and/or optional features of the flange clamp.

In a fifth preferred aspect, the present invention provides a flange clamp for circumferentially embracing and attaching first and second attachment flanges after said flanges have been brought together, said flange clamp having an inwardly-facing surface for bearing against said first and second flanges so that circumferential constriction of the clamp presses the first and second flanges towards each other, the flange clamp including a pivot arrangement for attaching the clamp to a substrate about a pivot point, so that the flange clamp is attachable to said substrate but pivotable about said pivot point away from the first and second flanges to allow said flanges to be brought together and pivotable back towards said flanges to circumferentially embrace said flanges for attachment.

Preferably, the substrate is fixed or attached with respect to one of the first and second flanges most preferably the first flange.

Preferably, the pivot arrangement is detachable from the substrate to allow the flange clamp to slide circumferentially around the flanges. In this way, the optimal angular position of the flange clamp may be selected for a particular assembly and location.

It is preferred to define an attachment axis for the flange clamp, being the axis extending perpendicular to the circumferential extent of the flange clamp. In this way, in use, the attachment axis is aligned with the principal axis of the flanges.

Preferably, the pivot arrangement includes a pivot pin protruding from the flange clamp. Most preferably, the pivot pin is shaped to resist detachment from the substrate along the attachment axis. The pivot pin may have a head portion for location in a corresponding recess in the substrate, the recess preferably including an overhang for preventing the axial detachment of the pivot pin from the recess.

The flange clamp preferably is C-shaped so that it has circumferential end portions that can be moved apart to receive the flanges and brought together to embrace the flanges and circumferentially constrict the clamp. Tension may be applied to the clamp via a bolt and a nut threaded on said bolt. The bolt is preferably hingedly attached to one circumferential end of the flange clamp. At the other circumferential end of the flange clamp, there is preferably provided a gate into which the bolt may be placed by rotation about its hinge. Preferably, the nut is shaped so that, when screwed up along the bolt and into the gate, the nut and thus bolt is prevented from escaping from the gate.

Preferably, the bolt is hinged using the pivot pin that attaches the flange clamp to the substrate. In this way, the construction of the flange clamp is simplified.

Preferably, the flange clamp has two arms connected via a hinge, the free ends of the arms constituting the circumferential ends of the clamp.

Preferably, the inwardly-facing surface of the flange clamp has a V-shaped surface. This allows the inwardly-facing surface to cooperate with the outer surfaces of the first and second flanges, assisting in pressing the flanges together.

### BRIEF DESCRIPTION OF THE DRAWINGS

Preferred and/or optional features of embodiments of the invention will now be described, by way of example, with reference to the accompanying drawings, in which:
Fig. 1 shows an assembly of a windlass, gearbox and motor according to an embodiment of the invention
Fig. 2 shows a partial enlarged view of the assembly of Fig. 1, excluding the windlass
Fig. 3 shows a partial schematic cross sectional view through Fig. 2
Fig. 4 shows a further partial schematic cross sectional view through Fig. 2
Fig. 5 shows a cross sectional view through an assembly of a windlass, gearbox and motor according to an embodiment of the invention
Fig. 6 shows an exploded view of a gearbox top plate, windlass adapter portion and flange clamp prior to assembly
Fig. 7 shows the gearbox top plat, windlass adapter portion and flange clamp of Fig. 6 after assembly
Figs. 8A-C show different views of a windlass adapter portion for use with embodiments of invention
Fig. 9A-F show different views of a first arm of a flange clamp according to an embodiment of the invention
Figs. 10A-F show different views of a second arm of a flange clamp according to an embodiment of the invention
Figs. 11A and 11B show different views of a pivot pin of a flange clamp according to an embodiment of the invention
Figs. 12A-C show different views of a threaded bolt of a flange clamp according to an embodiment of the invention
Figs. 13A-C show different views of a lock nut of a flange clamp according to an embodiment of the invention
Figs. 14A-D show different views of a gearbox top plate for use with embodiments of the invention

### DETAILED DESCRIPTION OF THE PREFERRED EMBODIMENTS

Embodiments of the invention are described with respect to a windlass. However, it is to be understood that the invention is also applicable to other marine line hauling devices, such as winches.

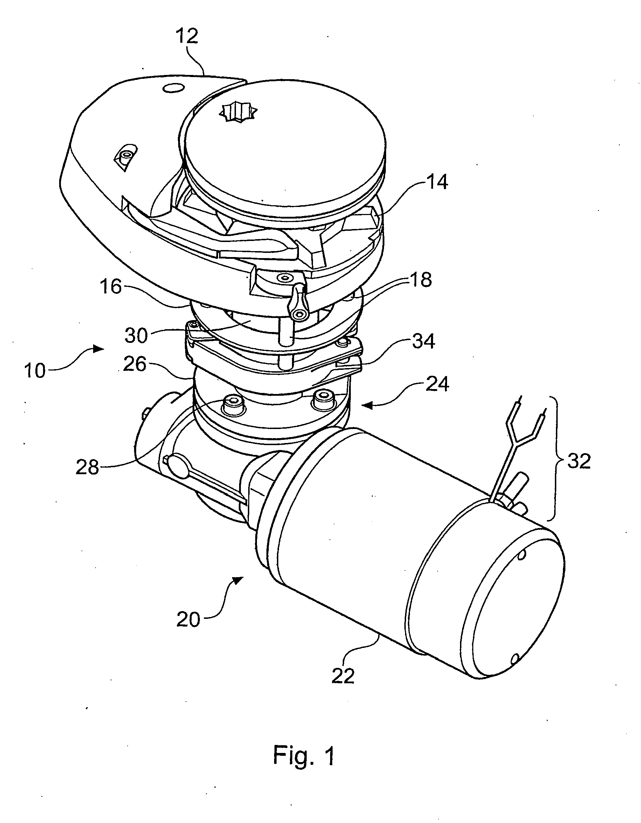

Fig. 1 shows an assembly 10 of a windlass 12 having a gypsy 14 suitable for hauling or lowering anchor chain.

The windlass is attached to a deck (not shown) of a marine vessel (not shown) via attachment plate 16 and bolts 18 and nuts (not shown).

A drive casing 20 is provided, having a motor casing 22 for housing an electric motor and a gearbox 24 for housing reduction gearing. Gearbox 24 attaches to the motor casing 22.

Gearbox 24 has a top plate 26 attached to the gearbox by bolts 28. Top plate 26 will be described in more detail below. A drive shaft (not shown) extends through top plate 26, through a windlass adapter portion 30 (described in more detail below) and into the windlass, in order to provide power to the windlass from the electric motor. Power and control signals are provided to the electric motor via cables 32.

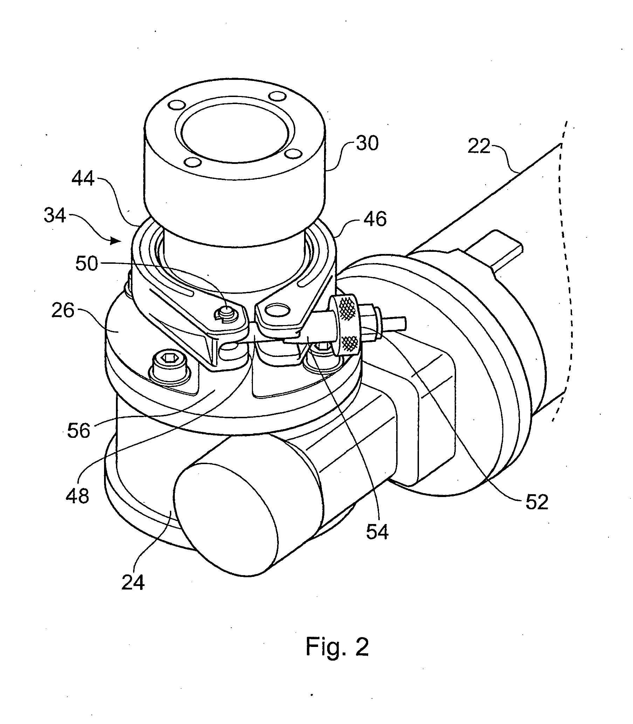

Top plate 26 of the gearbox 24 and the windlass adapter portion 30 are attached to each other via a flange clamp 34. Flange clamp 34 is shown in more detail in Fig. 2, which shows the arrangement of Fig. 1 from a different perspective and does not show the windlass 12. Top plate 26 presents a first flange 40 (not shown in Fig. 2) at its upper end and windlass attachment portion 30 presents a second flange 42 (not shown in Fig. 2) at its lower end. These are brought together and then fastened by flange clamp 34. Flange clamp 34 has a first arm 46 and a second arm 44 connected at one lateral side of the assembly by a hinge (not shown in Fig. 2). At the other lateral side of the assembly, the arms of the flange clamp are connected by a hinged bolt 48 extending from a pivot pin 50 that is rotatable within a corresponding hole through the free end of the second arm 44 of the flange clamp. The free end of the hinged bolt can be swung between an open position and a closed position, the closed position being shown in Fig. 2. In the closed position, the hinged bolt is received into a gate formed in the free end of the first arm 46 of the flange clamp. A locking nut 52 is threaded onto the hinged bolt 48. When the hinged bolt is in the closed position, rotation of the locking nut up the hinged bolt forces nose 54 of the locking bolt into the gate in which the hinged bolt is received. The gate is shaped so as to resist lateral movement of the nose 54 of the locking nut 52, so that subsequent tightening of the locking nut causes circumferential constriction of the flange clamp. In turn, this causes the first and second flanges to be pressed together.

As shown in Fig. 2, the top plate 26 of the gearbox has an upstanding support portion 56. This provides a support at which the flange clamp can be releasably attached without attachment of the flange clamp to either the first or the second flange. Support portion 56 will be described in more detail below.

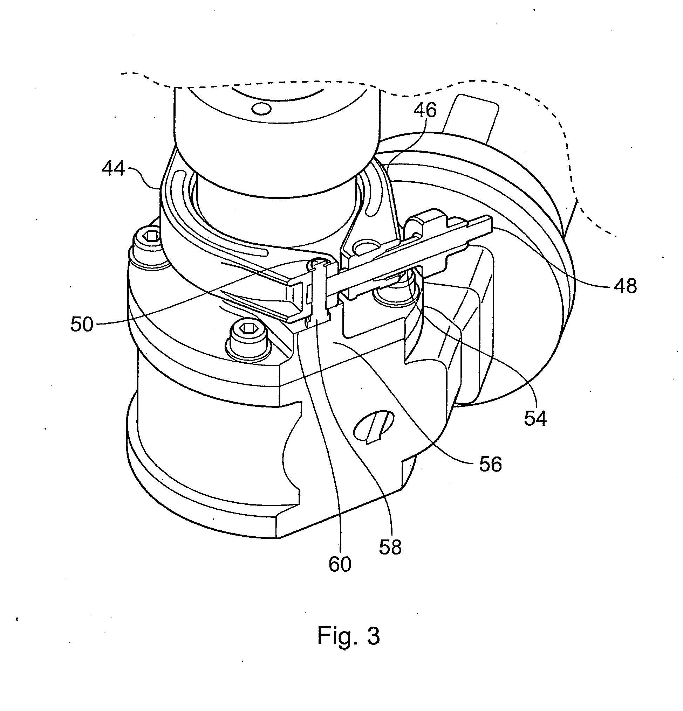

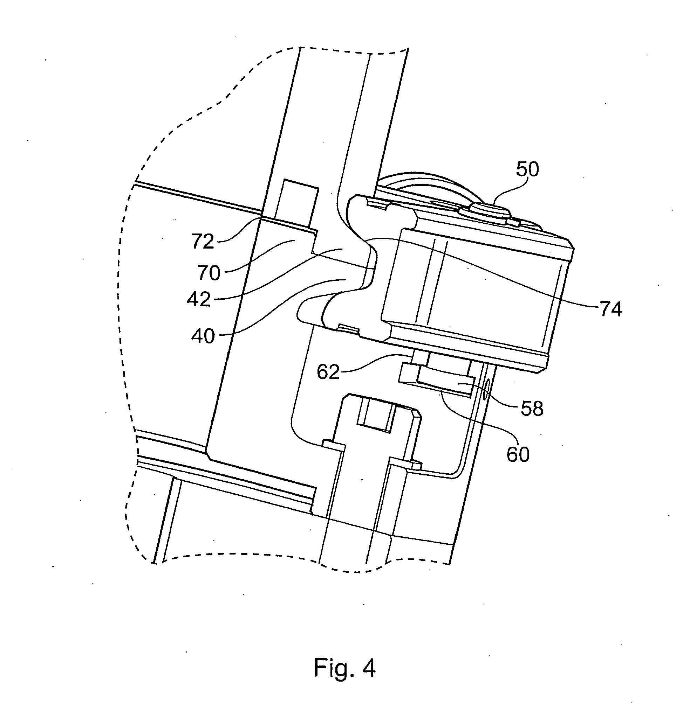

Fig. 3 shows a similar view to Fig. 2, except that a cross section is taken along the axis of hinged bolt 48. Pivot pin 50 extends through the free end of the second arm 44 of the flange clamp. At the lower end of the flange clamp is formed an enlarged head portion 58. Enlarged head portion 58 fits into a recessed track 60 formed at the support portion 56 of the top plate of the gear box. Recessed track 60 is formed with an overhang 62 (not shown in detail in Fig. 3 but shown in Fig. 4) so that the pivot pin (and hence the flange clamp) is prevented from moving axially away from the top plate of the gearbox. The flange clamp may therefore be attached to the support portion 56 by placing the enlarged head portion 58 of the pivot pin at the entrance to the recessed track 60 and pushing the enlarged head portion 58 along the recessed track, in a direction perpendicular to the axis of the driveshaft (not shown). When attached to the support portion in this way, the flange clamp may be swung away from the flanges when the clamp is in the open position, i.e. when the hinged bolt is not received in the gate of the free end of the first arm 46 of the flange clamp. This allows the flange clamp to be swung out of the way when the first and second flanges are brought together for abutment. Once the flanges are located together, the flange clamp can be easily swung back to receive and embrace the flanges, and subsequently the hinged bolt can be pivoted to be received in the gate and the locking nut tightened to clamp the flanges together.

Fig. 4 also shows the flanges 40 and 42 in cross section. The flanges each have a flat peripheral abutment surface. The first flange 40 has an upward inner step 70 and the second flange 42 has a corresponding recessed step 72. These are provided in order to assist in the location of the flanges together and to ensure that the flanges are aligned properly.

The outer surfaces of the flanges are tapered so that they decrease in thickness towards the periphery of the flanges. Each arm of the flange clamp 34 has a corresponding V-shaped inner face 74. As can easily be seen in Fig. 4, circumferential constriction of the flange clamp causes the first and second flanges to be pressed together, in view of the interaction between the tapered outer surfaces of the flanges and the V-shaped inner face of the flange clamp 34.

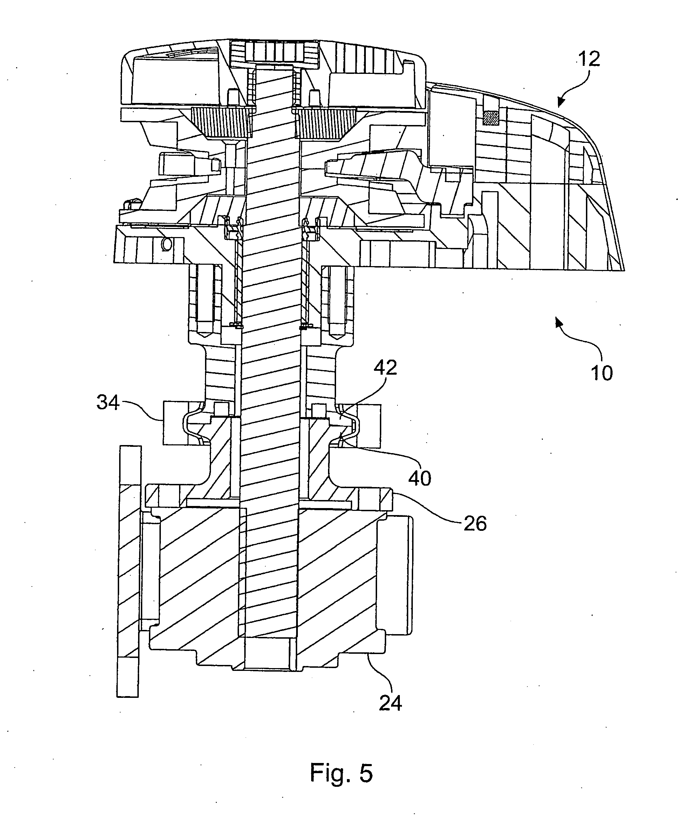

Fig. 5 shows a sectional view of an assembly substantially as shown in Fig. 1.

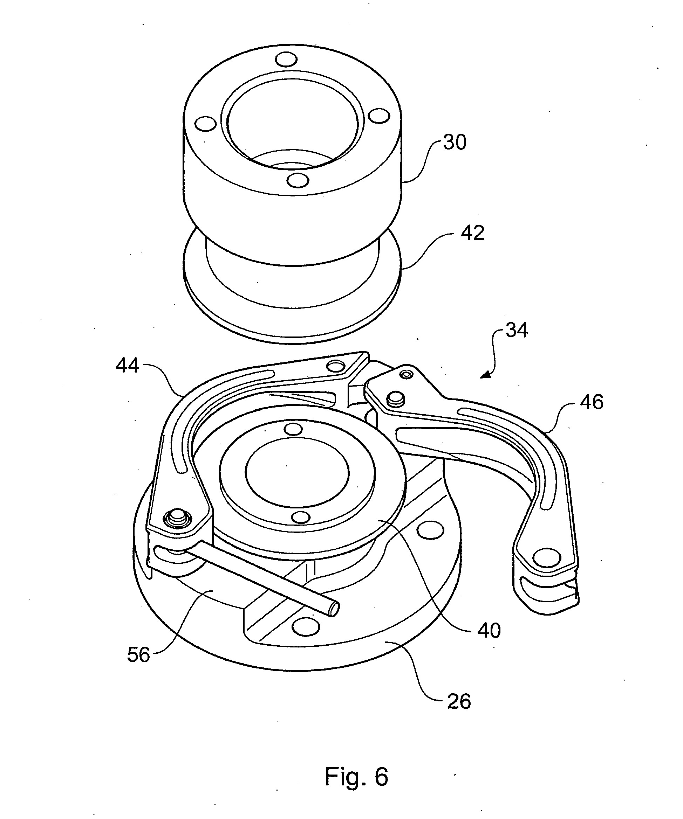

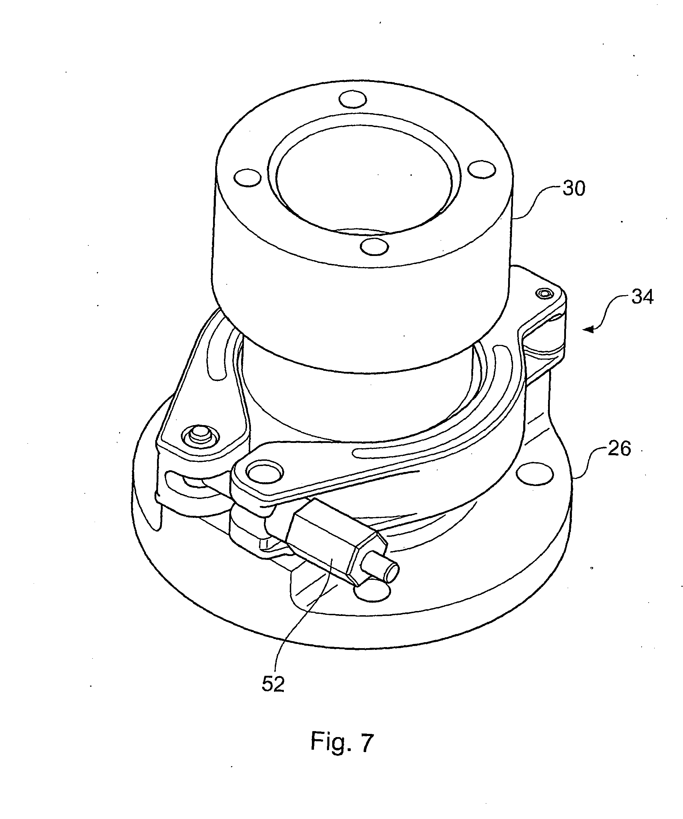

Fig. 6 shows an exploded view of the windlass adapter portion 30, the flange clamp 34 and the top cap 26 of the gearbox, before the flanges 40 and 42 are abutted and attached. The flange clamp 34 is releasably attached to the support portion and is swung away from the first flange 40 to allow the second flange 42 to come into abutment with the first flange. Fig. 7 shows the same components (with the addition of a locking nut 52) after the flanges have been attached using the flange clamp.

It is noted here that some of the components shown in Figs. 6 and 7 differ slightly in shape from those shown in Figs. 1-5. However, these components are given the same reference numerals in all of the figures, in view of their similarity in function between the different drawings.

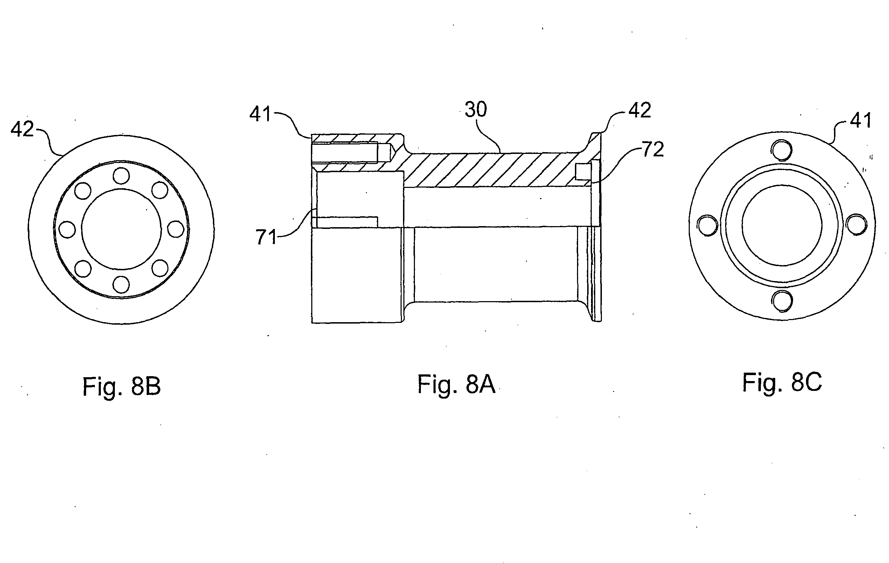

Figs. 8-14 show engineering drawings of various components. The skilled reader will understand that the precise measurements shown in the drawings may be altered in order to provide components suitable for a particular application.

Figs. 8A-C show different views of a windlass adapter portion 30. Fig. 8A shows a partial cross sectional view of the adapter portion 30, with preferred axial length about 110 mm. The taper of flange 42 is about 20°. The inner and outer diameters of the adapter portion are about 30 mm and about 70 mm respectively. Fig. 8B shows the view from the second attachment flange 42 end. Fig. 8C shows the view from the windlass attachment end 41. At the second attachment flange end, the recessed step 72 is shown.

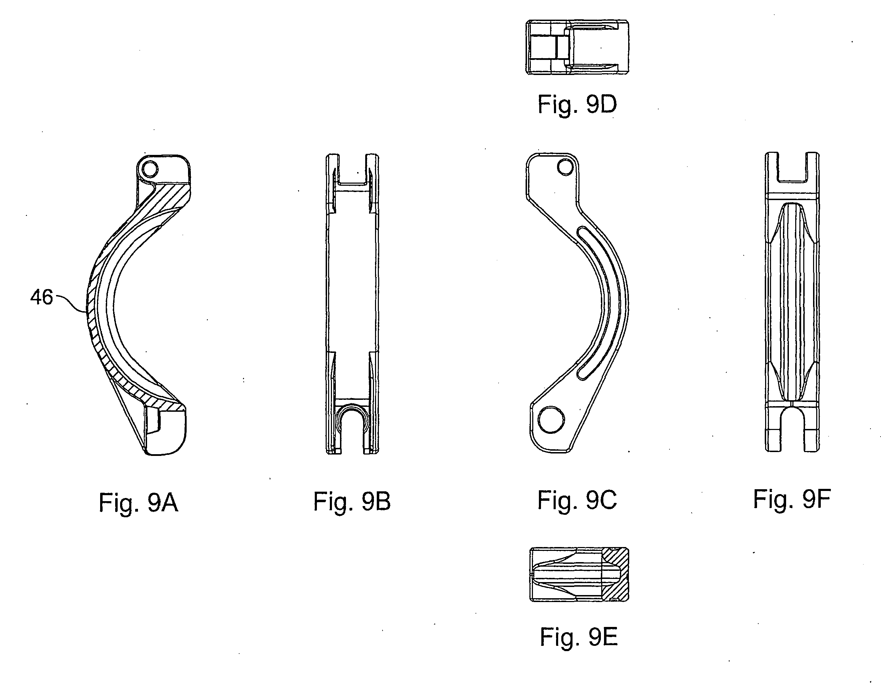

Figs. 9A-F show different views of the first arm 46 of the flange clamp 34.

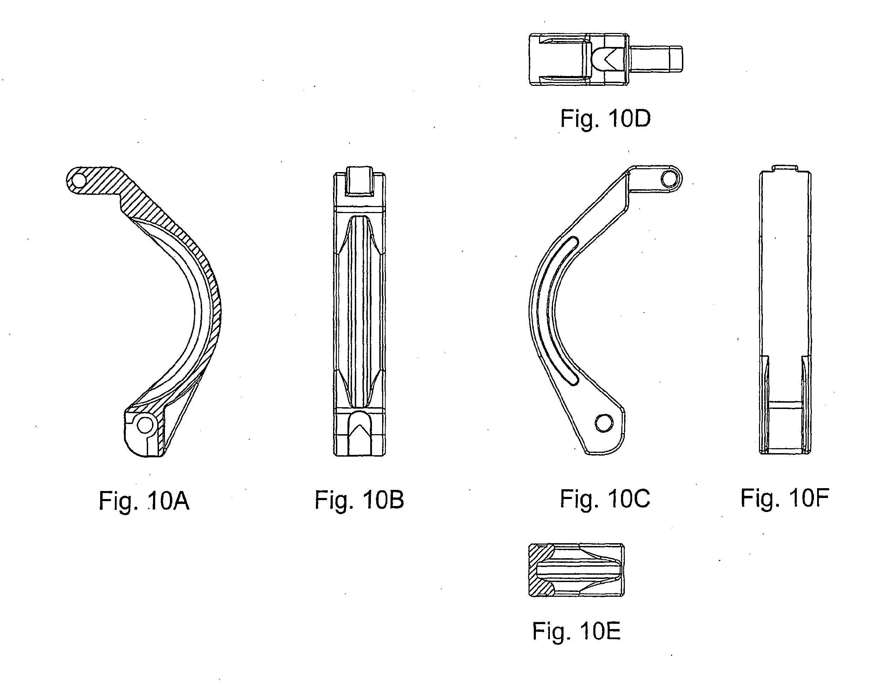

Figs. 10A-F show different views of the second arm 44 of the flange clamp 34.

As can be seen from Figs. 9 and 10, the first and second arms of the flange clamp are hinged and are sized and shaped to allow the clamp to embrace the flanges 40, 42.

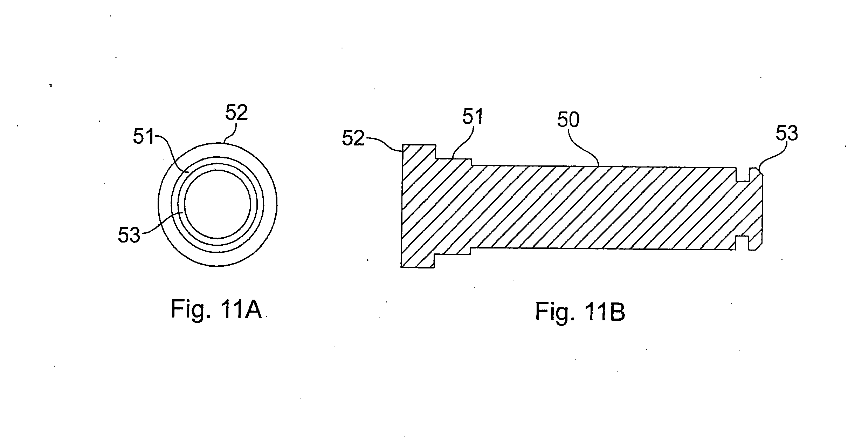

Figs. 11A and 11B show different views of pivot pin 50. The main shaft of the pivot pin 50 extends through a hole in the free end of the second arm of the flange clamp. A stepped portion 51 is formed between the main shaft and the enlarged head 52 in order to locate the enlarged head the correct distance from the second arm 46 of the clamp in order that the enlarged head can fit into the recessed track 60. At the other end of the pivot pin 50 is formed a barb 53, retained within the hole in the free end of the second arm of the flange clamp by a spring washer or the like. Fig. 11B shows the pivot pin 50 from the right hand end of Fig. 11A.

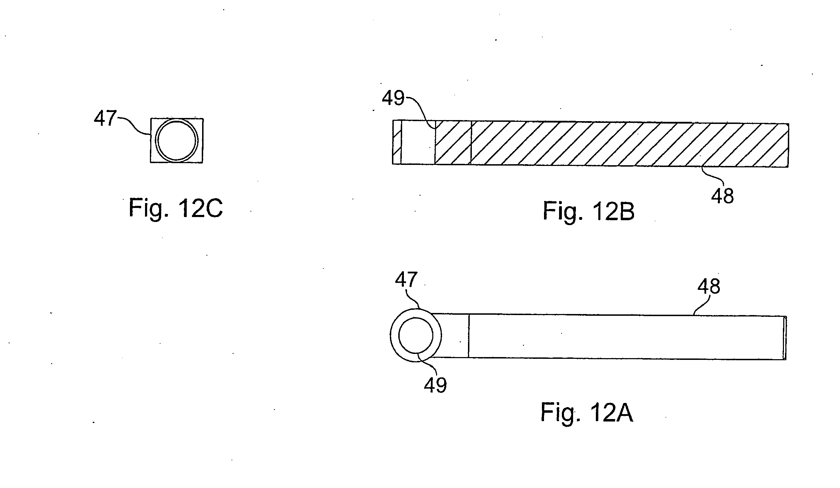

Figs. 12A-C show different views of the hinged threaded bolt 48. The bolt has a hole 49 formed at one end for locating the pivot pin 50. Hole 49 is surrounded by a cylindrical wall 47, coaxial with the axis of hole 49.

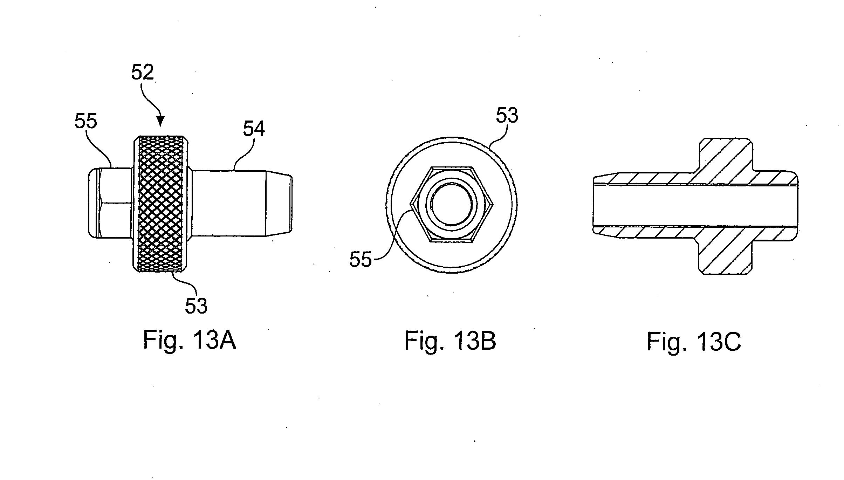

Figs. 13A-C show different views of the lock nut 52. Lock nut 52 has a knurled finger-tightening section 53, a hexagonal bolt-tightening section 55 and a forwardly-extending nose 54 with a tapered free end, the function of which is as described earlier.

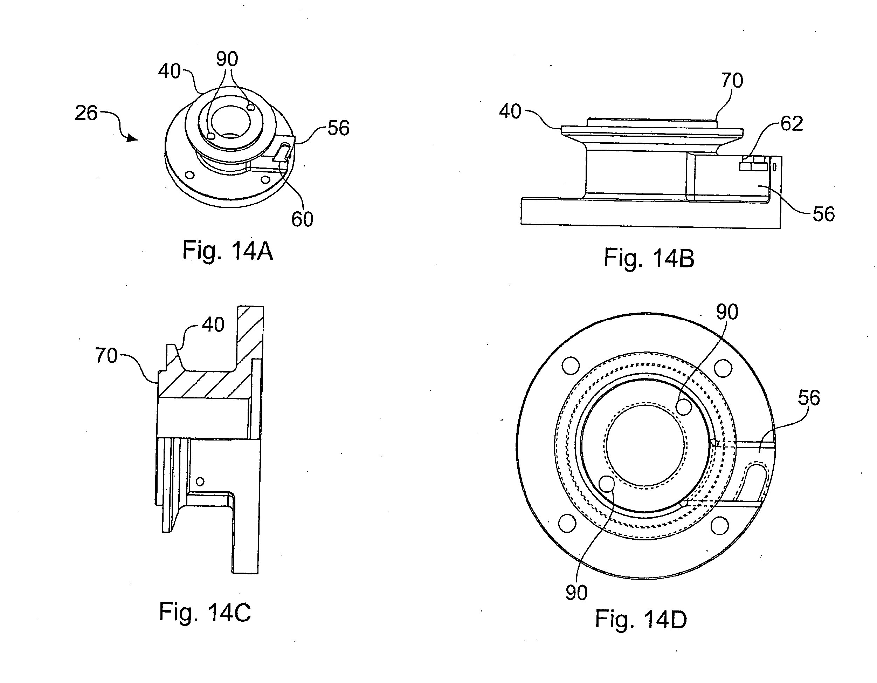

Figs. 14A-D show different views of the gearbox top plate 26. First flange 40 is formed at the upper surface of the top plate 26. The base of the top plate is provided with bolt holes for attachment to the gear box. First flange 40 has an upwardly projecting inner step 70 for location in the recessed step 72 of the windlass adapter portion. Holes 90 are provided in the projecting inner step 70, for the location of projecting pins (not shown) for engagement with corresponding holes in the windlass adapter portion. The engagement of these pins and holes provides resistance to the torque developed and transmitted by the drive shaft (not shown).

Recessed track 60 is formed in raised support portion 56. Recessed track 60 has an overhang 62 shaped to trap the enlarged head 52 of the pivot pin 50. Recessed track 60 takes the form of an arc, substantially centred on the principal axis of first flange 40. In this way, the flange clamp may be detached from the support portion 56 by rotation of the flange clamp around the first flange 40. This may be desirable in order to locate the locking nut in the most suitable position for tightening of the flange clamp, depending on the availability of space to the person installing the assembly.

The above embodiments have bee described by way of example. Modifications of these embodiments, further embodiments and modifications thereof will be apparent to the skilled person on reading this disclosure and as such are within the scope of the present invention.

## Claims

1. A method of assembling a drive casing (20) and a marine line hauling device (12), the drive casing (20) being provided with a first attachment flange (40), the hauling device being provided with a second attachment flange (42), the method including bringing said first attachment flange (40) and said second attachment flange (42) together and attaching them using a flange clamp (34) circumferentially embracing said flanges (40, 42), wherein said clamp (34) has an inwardly-facing surface for bearing against said first and second flanges, in which method circumferential constriction of the clamp (34) presses the first and second flanges towards each other.

2. A method according to claim 1 wherein the first attachment flange (40) is formed in a single piece with a top cap of the drive casing (20).

3. A method according to claim 1 or claim 2 wherein the line hauling device is one of a windlass and a winch.

4. A method according to any one of claims 1 to 3 wherein the first attachment flange and the second attachment flange are shaped so as to be attachable to each other only in a discrete number of relative positions.

5. A method according to any one of claims 1 to 4 wherein the first attachment flange has a face for abutment with a corresponding face of the second attachment flange, said face being perpendicular to a principal axis of the first attachment flange, the first attachment flange having a peripheral flat portion and a stepped inner portion for mating engagement with a corresponding stepped inner portion of the second attachment flange.

6. A method according to any one of claims 1 to 5 wherein each flange has a tapered cross-sectional profile, being thinner at the periphery of the flange than at an inner part of the flange.

7. A method according to any one of claims 1 to 6 wherein the flange clamp is attached with respect to either the first or second flange before the step of bringing the first and second flanges together.

8. A method according to claim 7 wherein the attachment of the flange clamp with respect to the first flange is achieved so that the flange clamp can be positioned so that it does not interfere with the operation of bringing the first and second flanges together.

9. A method according to claim 7 or claim 8 wherein the flange clamp is attached to a support substrate that itself is attached or attachable to the flange, the flange clamp optionally attaching to the support substrate via a pivot attachment, wherein the first and second flanges are optionally brought together into abutment and the flange clamp is then pivoted about its pivot attachment so as to circumferentially embrace the flanges and clamp them together.

10. A method according to claim 9 wherein the flange clamp is detachable from the support substrate by movement of the flange clamp in a direction perpendicular to the principal axis of the flange, the pivot attachment of the flange clamp to the substrate optionally being achieved via a pivot pin.

11. A method according to claim 9 or claim 10 wherein the pivot pin extends from the flange clamp into a corresponding pivot recess in the support substrate.

12. A method according to claim 11 wherein the pivot pin has an enlarged head portion for fitting into a corresponding enlarged portion of the recess, covered via an overhang, the recess optionally being a recessed track, defining an entry and exit path for the pivot pin along said track in order to attach and detach the flange clamp from the support substrate.

13. A marine line hauling assembly (10) comprising a line hauling device (12) and a drive casing (20), the drive casing having a first attachment flange (40) and the line hauling device having a second attachment flange (42), said first and second flanges being attached to each other by a flange clamp (34) circumferentially embracing said flanges (40, 42) and said first and second flanges being pressed together by an inwardly-facing surface of said flange clamp (34) due to circumferential tension in said flange clamp (34).

14. A drive casing kit for a marine line hauling assembly comprising a drive casing (20) and a flange clamp (34), the drive casing having a first attachment flange (40) for attachment to a second attachment flange (42) of a line hauling device (12) using the flange clamp (34), the flange clamp having an inwardly-facing surface for bearing against surfaces of the first and second attachment flanges, the flange clamp (34) being suitable for circumferentially embracing said flanges (40, 42) and pressing said flanges together due to circumferential tension in said flange clamp (34).

15. A marine craft such as a sailboat or a motorboat having a marine line hauling assembly according to claim 13.

## Patentansprüche

1. Verfahren zur Anordnung eines Antriebsgehäuses (20) und einer Schiffsleineneinholvorrichtung (12), wobei das Antriebsgehäuse (20) mit einem ersten Befestigungsflansch (40) bereitgestellt ist und die Schiffsleineneinholvorrichtung (42) mit einem zweiten Befestigungsflansch (42) bereitgestellt ist, wobei das Verfahren folgende Schritte umfasst: das Zusammenbringen des ersten Befestigungsflanschs (40) und des zweiten Befestigungsflanschs (42) und deren Verbindung unter Verwendung einer Flanschklemme (34), die die Flansche (40, 42) entlang ihres Umfangs einfasst, wobei die Klemme (34) eine nach innen gerichtete Oberfläche aufweist, die gegen den ersten und zweiten Flansch drückt, wobei in dem Verfahren eine Umfangsverengung der Klemme (34) den ersten und den zweiten Flansch zusammendrückt.

2. Verfahren nach Anspruch 1, worin der erste Befestigungsflansch (40) einstückig mit einer Abdeckkappe des Antriebsgehäuses (20) ausgebildet ist.

3. Verfahren nach Anspruch 1 oder 2, worin die Leineneinholvorrichtung ein Ankerspill oder eine Seilwinde ist.

4. Verfahren nach einem der Ansprüche 1 bis 3, worin der erste Befestigungsflansch und der zweite Befestigungsflansch so gestaltet sind, dass sie nur in einer bestimmten Anzahl aufeinander bezogener Positionen miteinander verbunden werden können.

5. Verfahren nach einem der Ansprüche 1 bis 4, worin der erste Befestigungsflansch eine Fläche aufweist, die auf der entsprechenden Fläche des zweiten Befestigungsflanschs aufliegt, wobei die Fläche im rechten Winkel auf eine Hauptachse des ersten Befestigungsflanschs steht, wobei der erste Befestigungsflansch einen flachen Umfangsabschnitt und einen gestuften Innenabschnitt aufweist, um mit einem entsprechenden gestuften Innenabschnitt des zweiten Befestigungsflanschs in Eingriff zu gelangen.

6. Verfahren nach einem der Ansprüche 1 bis 5, worin jeder Flansch ein sich verjüngendes Querschnittsprofil aufweist, das am Umfang des Flanschs dünner ist als am inneren Teil des Flanschs.

7. Verfahren nach einem der Ansprüche 1 bis 6, worin die Flanschklemme vor dem Schritt des Zusammenbringens des ersten und des zweiten Flanschs in Bezug auf den ersten oder den zweiten Flansch befestigt wird.

8. Verfahren nach Anspruch 7, worin die Befestigung der Flanschklemme in Bezug auf den ersten Flansch so vorgenommen wird, dass die Flanschklemme so positioniert werden kann, dass sie den Vorgang des Zusammenbringens des ersten und des zweiten Flanschs nicht beeinträchtigt.

9. Verfahren nach Anspruch 7 oder Anspruch 8, worin die Flanschklemme an einem Trägersubstrat befestigt ist, das selbst wiederum an dem Flansch befestigt ist oder an diesem befestigbar ist, wobei die Flanschklemme gegebenenfalls mittels Schwenkbefestigung an dem Trägersubstrat befestigt ist, wobei der erste und der zweite Flansch gegebenenfalls so zusammengebracht werden, dass sie aneinander anliegen, und die Flanschklemme dann um die Schwenkbefestigung schwenkt, um die Flansche entlang ihres Umfangs einzufassen und sie zusammen zu klemmen.

10. Verfahren nach Anspruch 9, worin die Flanschklemme von dem Trägersubstrat durch eine Bewegung der Flanschklemme in eine im rechten Winkel auf die Hauptachse des Flanschs verlaufende Richtung abnehmbar ist, wobei die Schwenkbefestigung der Flanschklemme an dem Substrat gegebenenfalls mittels eines Schwenkzapfens erfolgt.

11. Verfahren nach Anspruch 9 oder Anspruch 10, worin sich der Schwenkzapfen von der Flanschklemme in eine entsprechende Schwenkvertiefung in dem Trägersubstrat erstreckt.

12. Verfahren nach Anspruch 11, worin der Schwenkzapfen einen vergrößerten Kopfabschnitt aufweist, der in einen entsprechenden vergrößerten Teil der Vertiefung passt, wobei die Vertiefung durch einen Vorsprung abgedeckt ist und gegebenenfalls eine vertiefte Rille ist, die einen Eintritts- und Austrittsweg für den Schwenkzapfen entlang der Rille definiert, um die Flanschklemme an dem Trägersubstrat zu befestigen und von diesem abzunehmen.

13. Schiffsleineneinholanordnung (10), umfassend eine Leineneinholvorrichtung (12) und ein Antriebsgehäuse (20), wobei das Antriebsgehäuse einen ersten Befestigungsflansch (40) aufweist und die Leineneinholvorrichtung einen zweiten Befestigungsflansch (42) aufweist, wobei der erste und der zweite Flansch durch einen Flanschklemme (34), die die Flansche (40, 42) entlang ihres Umfangs einfasst, miteinander verbunden sind und der erste und der zweite Flansch durch eine nach innen gerichtete Fläche der Flanschklemme (34) aufgrund der Umfangsspannung in der Flanschklemme (34) zusammengedrückt werden.

14. Antriebsgehäusebausatz für eine Schiffsleineneinholanordnung, umfassend ein Antriebsgehäuse (20) und eine Flanschklemme (34), wobei das Antriebsgehäuse einen ersten Befestigungsflansch (40) zur Befestigung an einem zweiten Befestigungsflansch (42) einer Leineneinholvorrichtung (12) unter Verwendung der Flanschklemme (34) aufweist, wobei die Flanschklemme eine nach innen gerichtete Fläche aufweist, die gegen die Oberflächen des ersten und des zweiten Flanschs drückt, wobei die Flanschklemme (34) geeignet ist, um die Flansche (40, 42) entlang ihres Umfangs einzufassen und diese aufgrund der Umfangsspannung in der Flanschklemme (34) zusammen zu drücken.

15. Seefahrzeug, wie z.B. ein Segelboot oder ein Motorboot, mit einer Schiffsleineneinholanordnung nach Anspruch 13.

## Revendications

1. Procédé d'assemblage d'un tambour d'entraînement (20) et d'un dispositif de relevage de ligne marine (12), le tambour d'entraînement (20) étant muni d'une première bride de fixation (40), le dispositif de relevage étant muni d'une deuxième bride de fixation (42), le procédé incluant l'amenée de ladite première bride de fixation (40) et de ladite deuxième bride de fixation (42) ensemble et la fixation de celles-ci en utilisant un organe de serrage de bride (34) entourant circonférentiellement lesdites brides (40, 42), où ledit organe de serrage (34) présente une surface orientée vers l'intérieur pour porter contre lesdites première et deuxième brides, procédé dans lequel une constriction circonférentielle de l'organe de serrage (34) presse les première et deuxième brides l'une vers l'autre.

2. Procédé selon la revendication 1, dans lequel la première bride de fixation (40) est réalisée en une seule pièce avec un capuchon supérieur du tambour d'entraînement (20).

3. Procédé selon la revendication 1 ou la revendication 2, dans lequel le dispositif de relevage de ligne est un parmi un guindeau et un winch.

4. Procédé selon l'une quelconque des revendications 1 à 3, dans lequel la première bride de fixation et la deuxième bride de fixation sont configurées pour pouvoir être fixées l'une à l'autre seulement en un nombre discret de positions relatives.

5. Procédé selon l'une quelconque des revendications 1 à 4, dans lequel la première bride de fixation présente une face pour une butée contre une face correspondante de la deuxième bride de fixation, ladite face étant perpendiculaire à un axe principal de la première bride de fixation, la première bride de fixation ayant une portion périphérique plate et une portion intérieure étagée pour une prise de correspondance avec une portion interne étagée correspondante de la deuxième bride de fixation.

6. Procédé selon l'une quelconque des revendications 1 à 5, dans lequel chaque bride possède un profil conique en section transversale, en étant plus mince à la périphérie de la bride qu'à la partie interne de la bride.

7. Procédé selon l'une quelconque des revendications 1 à 6, dans lequel l'organe de serrage de bride est fixé par rapport à l'une quelconque des première ou deuxième brides avant l'étape d'assemblage des première et deuxième brides.

8. Procédé selon la revendication 7, dans lequel la fixation de l'organe de serrage de bride par rapport à la première bride est atteinte de telle sorte que l'organe de serrage de bride peut être positionné de façon qu'il n'interfère pas avec l'opération d'assemblage des première et deuxième brides.

9. Procédé selon la revendication 7 ou la revendication 8, dans lequel l'organe de serrage de bride est fixé à un substrat de support qui est lui-même fixé ou peut être fixé à la bride, l'organe de serrage de bride étant fixé en option au substrat de support par une fixation pivotante, où les première et deuxième brides sont optionnellement assemblées en butée, et l'organe de serrage de bride est ensuite amené à pivoter autour de sa fixation pivotante de manière à entourer circonférentiellement les brides et à les serrer ensemble.

10. Procédé selon la revendication 9, dans lequel l'organe de serrage de bride peut être détaché du substrat de support par un déplacement de l'organe de serrage de bride dans une direction perpendiculaire à l'axe principal de la bride, la fixation pivotante de l'organe de serrage de bride au substrat étant atteinte optionnellement par un pivot.

11. Procédé selon la revendication 9 ou la revendication 10, dans lequel le pivot s'étend de l'organe de serrage de bride dans un évidement de pivot correspondant dans le substrat de support.

12. Procédé selon la revendication 11, dans lequel le pivot possède une portion de tête agrandie pour s'insérer dans une portion agrandie correspondante de l'évidement, couvert par un surplomb, l'évidement étant en option un chemin évidé, définissant un chemin d'entrée et de sortie pour le pivot le long du chemin pour attacher et détacher l'organe de serrage de bride du substrat de support.

13. Assemblage de relevage de ligne marine (10) comprenant un dispositif de relevage de ligne (12) et un tambour d'entraînement (20), le tambour d'entraînement ayant une première bride de fixation (40), et le dispositif de relevage de ligne ayant une deuxième bride de fixation (42), lesdites première et deuxième brides étant fixées l'une à l'autre par un organe de serrage de bride (34) entourant circonférentiellement lesdites brides (40, 42), et lesdites première et deuxième brides étant pressées ensemble par une surface orientée vers l'intérieur dudit organe de serrage de bride (34) par suite d'une tension circonférentielle dans ledit organe de serrage de bride (34).

14. Kit de tambour d'entraînement pour un ensemble de relevage de ligne marine comprenant un tambour d'entraînement (20) et un organe de serrage de bride (34), le tambour d'entraînement ayant une première bride de fixation (40) pour la fixation à une deuxième bride de fixation (42) d'un dispositif de relevage de ligne (12) en utilisant l'organe de serrage de bride (34), l'organe de serrage de bride ayant une surface orientée vers l'intérieur pour porter contre les surfaces des première et deuxième brides de fixation, l'organe de serrage de bride (34) étant adapté pour entourer circonférentiellement lesdites brides (40, 42) et pour presser lesdites brides ensemble par suite d'une tension circonférentielle dans ledit organe de serrage de bride (34).

15. Embarcation marine comme un voilier ou un bateau à moteur, comportant un ensemble de relevage de ligne marine selon la revendication 13.
